# EUROPEAN PATENT SPECIFICATION

(11) **EP 4 419 923 B1**
(45) Date of publication and mention of the grant of the patent: **20.05.2026**
(21) Application number: 22772490.3
(22) Date of filing: 01.09.2022
(51) Int. Cl.: G01N 35/04, A01N 1/14, B01L 7/00, B65G 1/04

(54) **STORAGE DEVICE FOR TUBE RACKS WITH A CAROUSEL AND A TUBE PICKER**
LAGERVORRICHTUNG FÜR ROHRGESTELLE MIT EINEM KARUSSELL UND EINEM ROHRGREIFER
DISPOSITIF DE STOCKAGE POUR PORTOIRS POUR TUBES COMPORTANT UN CARROUSEL ET UN DISPOSITIF DE SAISIE DE TUBES

(30) Priority: 18.10.2021 CH 0704112021
(43) Date of publication of application: 28.08.2024
(73) Proprietor: Liconic AG, 9493 Mauren (LI)
(72) Inventor: MALIN, Cosmas, 9493 Mauren (LI)
(74) Representative: E. Blum & Co. AG
(86) International application number: PCT/EP2022/074271
(87) International publication number: WO 2023/066557

(56) References cited:
- EP-A1- 3 006 867
- US-A1- 2004 115 101
- US-B1- 6 357 983

## Description

### Technical Field

The invention relates to a storage device for tube racks having a carousel and a plurality of tube rack locations arranged on the carousel. The storage device further comprises a tube picker.

### Background Art

EP 3006867 describes a storage device that can be used for storing tube racks in a plurality of storage locations located on a carousel. The device further comprises an item picker or tube picker adapted to access individual tubes located in a tube rack while the tube rack is resting in a nest. The picker has a tube gripper that can be moved, using three displacement mechanisms, along three dimensions in respect to the nest.

### Disclosure of the Invention

The problem to be solved by the present invention is to provide a storage device of this type that has a simplified design.

This problem is solved by the storage device of claim 1.

Accordingly, the storage device comprises at least the following elements:
- A tube rack handler: This handler is adapted and structured to handle individual tube racks, in particular to move them from one place to another.
- A carousel having a vertical rotation axis: This carousel can be used to store the tube racks. It is rotatable, about the rotation axis, in respect to the tube rack handler, which allows to bring the handler into angular position with a storage location to be accessed.
- A plurality of tube rack storage locations arranged on the carousel: Each such storage location may be adapted to receive a tube rack.
- A tube picker: The tube picker is adapted and structured to access tubes in a tube rack. It comprises at least one nest sized and structured to receive a tube rack. And it further comprises a tube rack gripper structured to engage an individual tube in a tube rack located in the nest.

According to the invention, the storage locations and the nest(s) are both accessible by means of the tube rack handler.

The nest is mounted to the carousel and rotatable, in respect to the gripper, by rotating the carousel. In other words, the rotation of the carousel can not only be used for bringing the carousel into a desired angular position with the tube rack handler, but it also can be used to bring the nest into a desired angular position with the gripper. Hence, this allows to dispense with at least one displacement mechanism for the tube picker.

Advantageously, the tube picker comprises at least two nests, in particular at least three nests. In this case, the tube picker may be structured to move tubes between tube locations of different tube racks mounted in the two nests.

In particular, the nests are horizontally arranged side by side and rotated in respect to each other about the rotation axis of the carousel. This allows to move the gripper from a given location in one tube rack to the same location in the other tube rack by simply rotating the carousel.

Advantageously, the tube picker is arranged vertically above the storage locations. This provides a compact design with a small footprint.

Each nest may comprise three corner supports arranged on first, second, and third corners of a rectangle, with each corner support having two stops located at edges of the rectangle. The corner supports can be used to roughly position a tube rack in the nest. The nest may further have a clamp located at the fourth corner of the nest and an actuator structured to horizontally move the clamp. This clamp may be adapted and structured to be horizontally pushed against a corner of the tube rack, thereby clamping the tube rack in a defined position between the clamp and at least some of the corner supports.

The invention also relates to a storage cabinet comprising this storage device. Such an incubator has a chamber and a climate controller adapted to control the temperature and/or the atmospheric condition parameters within the chamber. The storage device is arranged within the chamber.

Further, the invention relates to a method for operating the storage device or storage cabinet comprising at least the step of using the tube rack handler to transfer tube racks between the tube picker and the storage location.

Advantageously, the method further comprises the steps of:
- Placing a tube rack having a tube location to be engaged in the nest(s). This tube rack can be retrieved from one of the storage locations or from an external system.
- Rotating the carousel to position the tube gripper at a location above tube location. In addition, the tube gripper may be displaced along one horizontal direction, in particular perpendicular to the rotation axis, to position it.

### Brief Description of the Drawings

The invention will be better understood and objects other than those set forth above will become apparent when consideration is given to the following detailed description thereof. Such description makes reference to the annexed drawings, wherein:
Fig. 1 shows a storage cabinet with a storage device,
Fig. 2 shows the storage device of Fig. 1 with storage racks,
Fig. 3 is a first view of the storage device of Fig. 2 without the storage racks,
Fig. 4 is a second view of the storage device of Fig. 2 without the storage racks,
Fig. 5 shows the top of the storage device with the tube picker in better detail,
Fig. 6 shows the nest assembly of the tube picker,
Fig. 7 is a first view of the tube picker without the nest assembly,
Fig. 8 is a second view of the tube picker without the nest assembly,
Fig. 9 is an illustration showing a first possible alignment of the storage locations, the nests, and the handler,
Fig. 10 is an illustration showing a second possible alignment of the storage locations, the nests, and the handler, and
Fig. 11 a sectional-view-illustration of the housing of the storage cabinet.

### Modes for Carrying Out the Invention

### Definitions

A "tube rack" is a receptacle for a plurality of probe tubes, advantageously providing tube locations in a two-dimensional array. Typical tube diameters are between 5 and 20 mm. Advantageously, the tube rack has the standardized SBS footprint of approximately 128 mm x 85 mm +/- 10 mm, in particular of 127.75 x 85.48 mm. In another embodiment, "cryo boxes" with footprints of 130x130mm or 200x200m may e.g. be used.

The "vertical" direction is defined by the direction of the rotation axis of the carousel. In a normal operation of the storage device, this axis is parallel to the direction of gravitation.

### Storage Cabinet

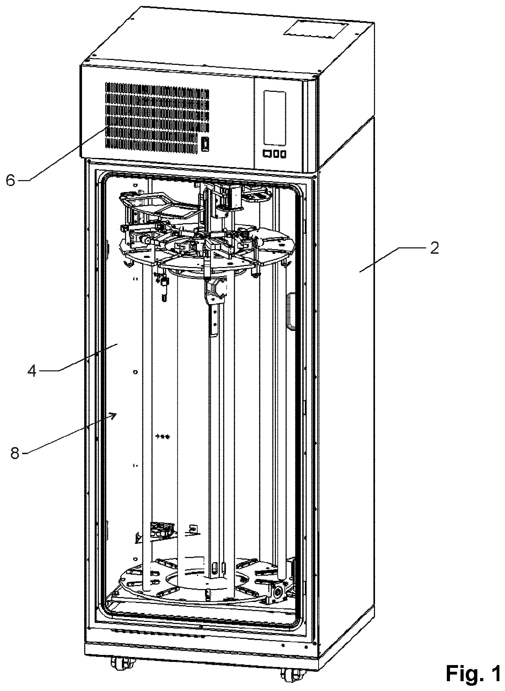

The storage cabinet shown in Fig. 1 comprises a cabinet housing 2 with a chamber 4 arranged within cabinet housing 2. A user-operatable door (not shown in Fig. 1) closes a front side of chamber 4, and a further, machine-controlled door may be arranged in a further wall of cabinet housing 2. The latter may be used to exchange tube racks with an external system.

The storage device further comprises a climate controller 6, which may e.g. comprise a heater or heat pump adapted to maintain a desired temperature within chamber 4, e.g. a temperature below 0°C or, in another embodiment or application, a temperature above 0°C. Alternatively or in addition thereto, climate controller 6 may comprise a humidifier, dryer, and/or gas source adapted to maintain defined atmospheric composition parameters within chamber 4. These parameters may comprise at least one of the following: a desired humidity, e.g. less than 50% relative humidity, and/or a desired amount of oxygen and/or nitrogen.

In particularly advantageous embodiments, climate controller 6 may be adapted to maintain a temperature of -20°C at a relative humidity of less than 50%, in particular of less than 20% in chamber 4.

In another embodiment, the storage device may be an "open store", i.e. it may not comprise its own chamber and e.g. be arranged in a larger laboratory or storage space.

A storage device 8 is located in chamber 4 for storing tube racks. Examples for the design and operation of storage device 8 are provided herein.

### Storage Device

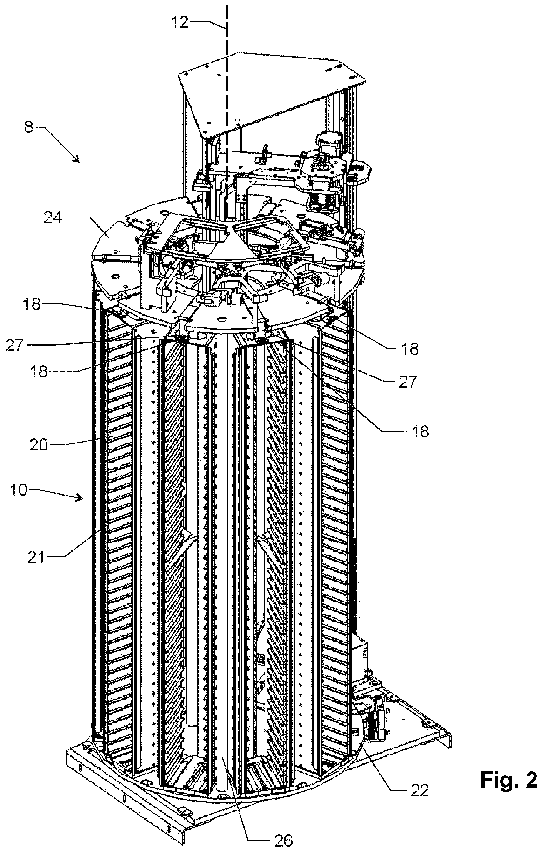

An embodiment of storage device 8 is shown in Figs. 2 - 4.

Storage device 8 comprises a carousel 10 rotatable about a vertical rotation axis 12. A rotational drive 14 is adapted to rotate carousel 10 about rotation axis 12 into any defined rotational position. It may include a position detector adapted to detect the current absolute rotational position of carousel 10.

In the present embodiment, a plurality of storage racks 18, as shown in Fig. 2, are located on carousel 10 and rotatable therewith.

Each storage rack 18 forms a plurality of storage locations 20 arranged vertically above each other, each of which is adapted to receive a single tube rack or other laboratory object. The storage locations 20 may be formed by regularly spaced ledges 21 arranged on the walls of the storage racks 18.

The storage racks 18 are advantageously located at regular angular intervals along the circumference of carousel 10.

Thus, carousel 10 forms a plurality of the storage locations 20 for receiving the tube racks. Advantageously, the storage locations 20 are located in a two-dimensional array at several angular positions and several vertical positions of carousel 10. In particular, and as shown, the storage locations 20 are arranged in a regular grid extending vertically along and tangentially around carousel 10.

In the shown embodiment, the storage racks 20 are mounted between a base plate 22 and a top plate 24 of carousel 10, with base plate 22 and top plate 24 interconnected by means of support members 26 extending parallel to axis 12.

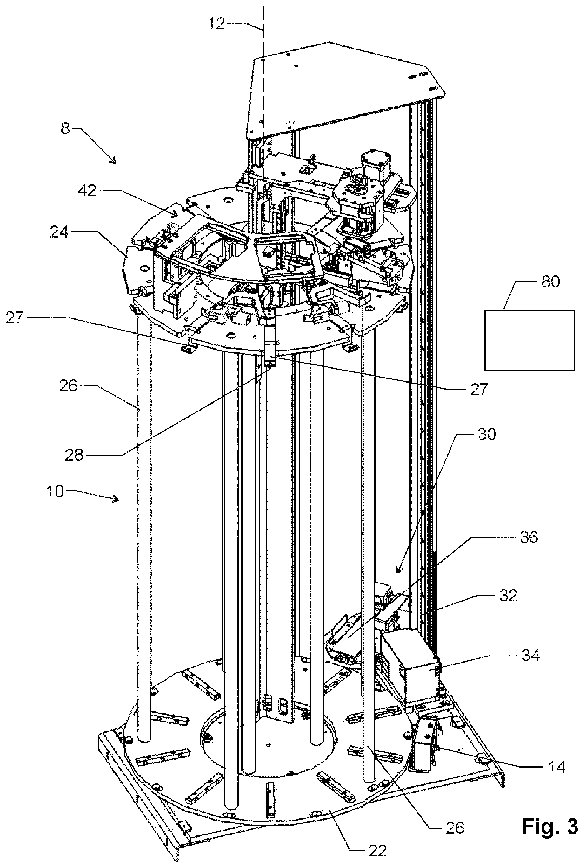

Carousel 10 may further comprise spring members 27, with one spring member 27 located above each storage rack 20 and elastically engaging the same. Each spring member may e.g. comprise a downwards-projecting pint 28 (see Fig. 3) for mating with an opening at the top of the storage rack. Hence, each spring members 27 is adapted to laterally positioning the top end of its attributed storage rack 20. The spring member 27 is adapted to be lifted, against an elastic deformation, when the storage rack 20 is to be removed from or inserted into the carousel.

In the shown embodiment, the spring member 27 is a leaf spring or any other spring arrangement structured to be elastically at least ten times stiffer against horizontal movements of the top end of the storage rack 20 than against vertical movements of the top end of the storage rack 20.

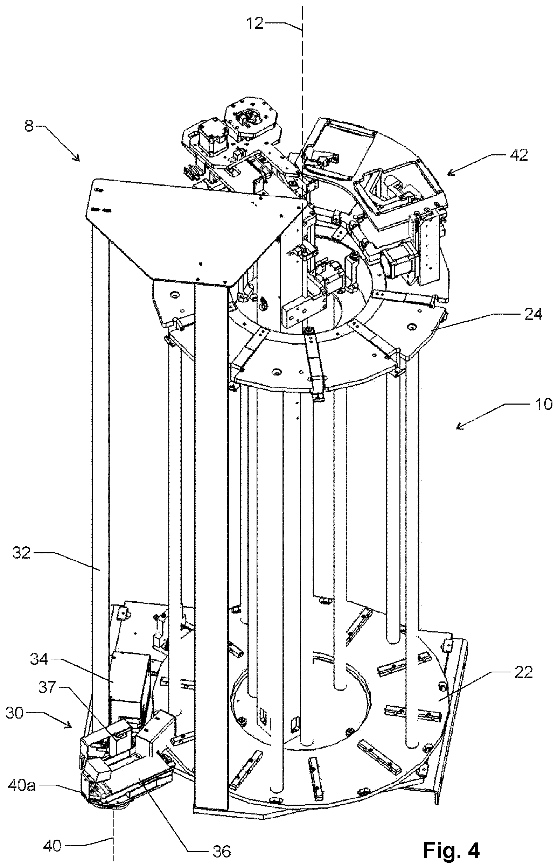

Storage device 8 further comprises a rack handler 30, see Figs. 3 and 4. It is mounted to a vertical guide rail 32. An elevator drive 34 of rack handler 30 is adapted to displace rack handler 30 along guide rail 32.

Rack handler 30 further comprises a gripper or shovel 36, which is extendible into a horizontal direction, in particular linearly extendible, by means of a gripper actuator 37. It can, in particular, be extended into carousel 10 in order to pick up or deposit a tube rack from/into a storage location 20.

Thus, rack handler 30 can access any of the storage locations within carousel 10.

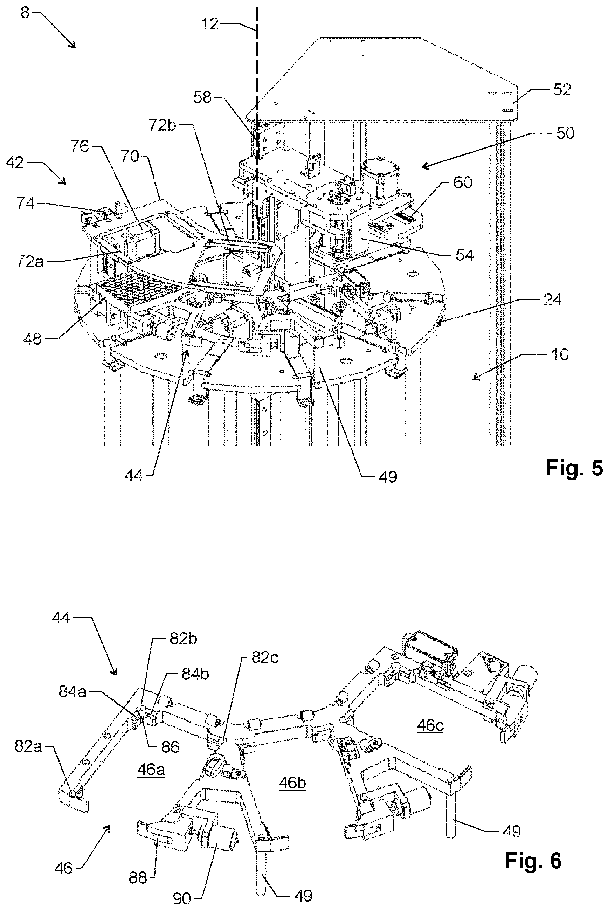

Further, rack handle 30 may be pivotal about a vertical rack handler axis 40 by means of a rotational drive 40a in order transfer tube racks between the storage device and an external system, such as e.g. shown in and described in reference to Figs. 6a, 6b of US 2004/0115101.

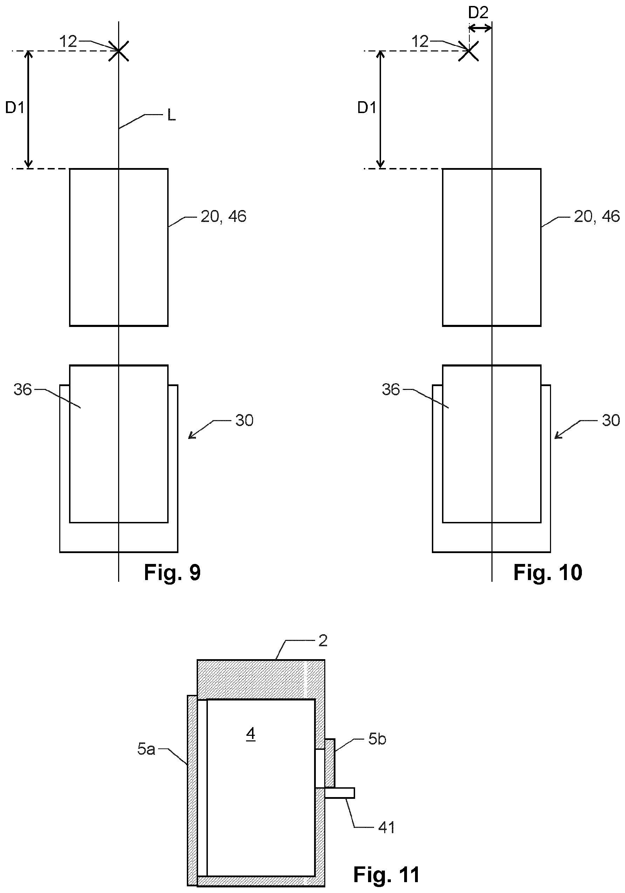

This is illustrated in Fig. 11, which is a schematic sectional view drawing of the storage cabinet showing housing 2, chamber 4, a user-operatable door 5a at a front side thereof, and a machine-controlled door 5b at a backside thereof.

A transfer station 41 is arranged outside the storage cabinet, advantageously mounted to housing 2 outside the storage cabinet. Advantageously, it is located next to machine-controlled door 5b. It forms a support for temporarily receiving a tube rack as it is moved from the storage device to the external system or from the external system to the storage rack.

Rack handler 30 is adapted to access a tube rack on transfer station 41, i.e. to deposit a tube rack on transfer station 41 and/or to pick up a tube rack from transfer station 41, advantageously by reaching through machine-controlled door 5b.

Storage device 8 further comprises a tube picker 42 located e.g. at the top of carousel 10.

The design and operation of tube picker 42 is described in the next section.

### Tube Picker

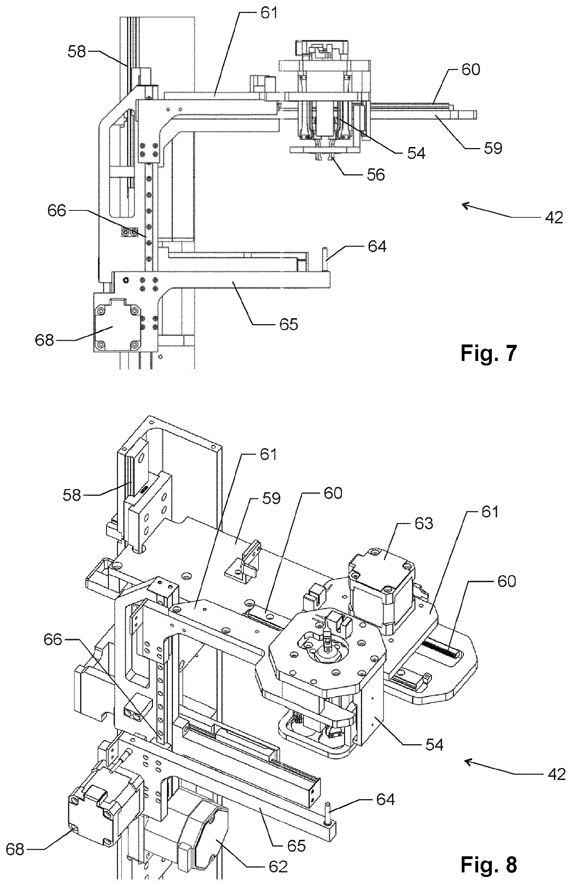

An embodiment of tube picker 42 is shown in Figs. 5 - 8.

It comprises a nest assembly 44 forming e.g. three nests 46a, 46b, 46c as best seen in Fig. 6. In the following, the nests are commonly referred as "nest(s) 46". Each nest 46 is structured to receive a tube rack 48 (cf. Fig. 5) in a defined position.

Nest assembly 44 is fixedly mounted to carousel 10, e.g. to top plate 24 of carousel 10, e.g. by means of support members 49.

Each nest 46 is rectangular, i.e. it forms a rectangular nest to receive a rectangular tube rack 48, just like the storage locations 20, and has the same footprint as the storage locations 20 in order to receive the same tube racks 48.

In addition, the storage locations 20 and the nest(s) 46 are advantageously both located such that, by means of a suitable rotation of carousel 10, they can be brought into alignment with handler 36, which allows handler 36 to easily transfer tube racks 48 between the storage locations 20 and the nest(s) 46.

In other words, the storage locations 20 and the nest(s) 46 are advantageously both accessible by handler 36.

In a particularly advantageous embodiments, they storage locations 20 and the nest(s) 46 are accessible by handler 36 without a need to rotate handler 36 about its axis 40.

One embodiment to achieve this is illustrated in Fig. 9. Here, the positions of a storage location 20 or of a nest 46 are represented by a rectangle, with the "position" being defined as the smallest enclosing rectangle of a tube rack located in storage location 20 or nest 46, respectively.

In the embodiment of Fig. 9, the radial symmetry axes L of the rectangular positions both of the storage location 20 or nest 46 intersect rotation axis 12 perpendicularly, and the distance D1 between the rotation axis 12 and the position is the same for the storage locations 20 and nests 46.

This symmetry axis L is parallel to the extension direction of shovel or gripper 36.

It must be noted, though, that the symmetry axes L do not necessarily have to intersect rotation axis 12. Rather, they may generally be located at a distance D2 from rotation axis 12 as shown in Fig. 10 as long as this distance D2 is the same for the storage locations 20 as well as for the nest(s) 46.

Further, the distance D1 between rotation axis 12 and the position may be different for the storage locations 20 and the nest(s) 46, in which case both positions can still be reached but the length of extension of the shovel or gripper 36 will vary between the storage locations 20 and the nest(s) 46.

Hence, in more general terms, the distances D2 between the rotation axis 12 and the radial symmetry axes L of the rectangular positions of the storage locations 20 and the nest(s) 46 are advantageously the same.

Note: the radial symmetry axes L of the rectangular positions of the storage locations 20 and the nest(s) 46 advantageously extend in a direction perpendicular to rotation axis 12.

Figs. 5, 7, and 8 further show that tube picker 42 comprises a tube gripper 54 located above the nests 46. In contrast to the nests 46, which rotate together with carousel 10, tube gripper 54 is stationary when carousel 10 rotates, i.e. it does not rotate with carousel 10.

Advantageously the tube picker 42 is mounted stationary vertical rail connected to the rack handler rail by a connection plate 52.

The tube gripper 54 is mounted on a radially displaceable carriage 61. The tube gripper 54 advantageously has several fingers 56 adapted to engage an individual tube in a tube rack 48 located in one of the nests 46. The design of gripper 54 may e.g. be as described in WO 2017/049416.

Tube picker 42 comprises a first linear guide 58 extending parallel to rotation axis 12 and a first carriage 59 mounted thereto. It further comprises a second linear guide 60 mounted to first carriage 59 and extending perpendicularly to rotation axis 12. A second carriage 61 is mounted to second linear guide 60.

Tube gripper 56 is mounted to second carriage 61 and therefore to both the first and the second linear guide 58, 60 in order to be displaceable perpendicularly to and parallel to rotation axis 12. In the shown embodiment.

A first drive 62 may be provided to displace first carriage 59 and therefore tube gripper 56 along first linear guide 58, and a second drive 63 may be provided to displace second carriage 61 and therefore tube gripper 56 along second linear guide 60.

The displacement along second linear guide 60 in combination with the rotation of carousel 10 allows to place tube gripper 54 above any of the tube locations of a tube rack 48 held in any of the nests 46.

First linear guide 58 allows to lower and raise tube gripper 56 when accessing a tube.

Tube picker 42 further comprises a pusher 64, which can be positioned below the nests 46. It is mounted to a third carriage 65 vertically displaceable along a third linear guide 66 and movable by means of a third drive 68. Third linear guide 66 is mounted to second carriage 61 such that it moves together with tube gripper 54. Hence, pusher 64 remains vertically below tube gripper 54 is tube gripper is moved along second linear guide 60.

By means of third linear guide 66 and third drive 68, pusher 64 can be raised to push into any tube location of the tube rack 48 as tube gripper 54 engages it from above. In this manner, pusher 64 can support tube gripper 54 in lifting the tubes from their tube locations even if they are stuck therein, e.g. due to ice formation.

Hence, in more general terms, tube picker 54 comprises a pusher 64 mounted via third linear guide 66 to tube gripper 54, wherein third linear guide 66 extends parallel to rotation axis 12 and wherein pusher 64 is movable, along third linear guide 66, from a position below the nest(s) 46 to a position where it extends into the nest(s) 46.

Same as tube gripper 54, pusher 64 does not rotate with carousel 10 but remains stationary while carousel 10 rotates.

Tube picker 42 further comprises a retainer assembly 70, which can be seen in Fig. 5. Retainer assembly 70 is e.g. a single plate, and it forms a first retainer 72a arranged above first nest 46a and a second retainer 72b arranged above second nest 46b.

Same as the nests 46, retainer assembly 70 is mounted to carousel 10 and rotatable, in respect to the tube gripper, by rotating carousel 10.

Retainer assembly 70 is mounted to a fourth guide 74 extending parallel to rotation axis 12. Retainer assembly 70 displaceable along fourth guide 74 by means of a fourth drive 76. By means of fourth guide 74, retainer assembly 70 can be lowered from above onto the nests 46 in order to vertically retain any tube racks therein as a tube is extracted therefrom.

Fourth guide 74 is mounted to top plate 24 of carousel 10. Hence, in more general terms, retainer assembly 70 and therefore the retainer(s) 72a, 72b rotate together with carousel 10.

As shown in Figs. 5 and 6, the present embodiment comprises a first nest 46a, a second nest 46b, and a third nest 46c. In operation, tube picker 42 is adapted to move tubes between tube racks in the first and third nest 46a, 46c and also to move tubes between tube racks in the second and third nests 46b, 46c. Advantageously, second nest 46b is located between first and third nests 46a, 46c, which allows to design retainer assembly 70 to secure two adjacent nests 46a, 46b.

### Nests

The design of the nests 46 is shown in Fig. 6. As can be seen, each nest 46 encloses a rectangular position for receiving a tube rack. Advantageously, this rectangular position is formed by a vertical passage extending through the nest such that the tubes can be accessed from above (by the tube gripper) as well as from below (by the pusher 64 and/or by the rack handler 30).

Each nest 46 comprises three corner supports 82a, 82b, 82c arranged at first, second, and third corners of the rectangle. Each corner support 82a, 82b, 82c forms two lateral stops 84a, 84b located at edges of the rectangle to restrict the horizontal position of the tube rack. It also has a ledge 86 to support the corner of the tube rack from below.

In addition, nest 46 comprises a clamp 88 located at a forth corner of the rectangle as well as a clamp actuator 90 structured to horizontally move clamp 88 in order to push the rack holder against at least some of the corner supports 82a, 82b, 82c in order to bring it into a well-defined position.

As also can be seen in Fig. 6, the nests 46a, 46b, 46c are mutually rotated in respect to each other, i.e. the rectangle of one nest can be mapped to the rectangle of any other nest by rotation about rotation axis 12. As a consequence of this, if tube gripper 54 is located above a given tube location of a tube rack in one nest, it can be moved to the same tube location of a tube rack in another nest by simply rotating the carousel about rotation axis 12.

### Operation

Storage device 8 comprises a control unit 80 as schematically depicted in Fig. 3. It controls the operation of the device.

Control unit 80 can e.g. comprise a microprocessor and memory and is controlled by software stored in said memory. It further comprises interfaces and drivers to the various drives as well as to sensors of the storage device as known to the person skilled in the art.

In particular, control unit 80 is adapted to place a tube rack have a tube location to be engaged into one of the nest(s) 46. Then, it rotates carousel 10 to a position the tube picker at a location above this tube location.

Advantageously, control unit 80 is adapted to control tube rack handler 30, tube picker 42, and carousel 10 to perform one or more of the following operations:
A) Cause tube rack handler 30 to engage a first tube rack in a given storage location 20 in carousel 10 and to transport it to one of the nests 46. Advantageously, the first tube rack is placed in the first or second nest 46a, 46b.
B) Cause tube rack handler 30 to receive a second tube rack, e.g. from a system external to the storage device, and to transport it to one of the nests 46. Advantageously, the second tube rack is placed in third nest 46c.
C) Cause tube picker 42 to transfer one or more tubes between the first tube rack and the second tube rack.

Further, control unit 80 may be adapted to control tube rack handler 30, tube picker 42, and carousel 10 to perform one or more of the following operations:
D) Cause tube rack handler 30 to engage a third tube rack in a given storage location 20 and to transport it to one of the nests 46 while the first tube rack is located in one of the nests 46.
E) Cause tube rack handler to return the first and/or third tube rack to one of the storage locations 20.
F) Cause tube rack handler to return the second tube rack to the system external to the storage device.

Generally, the method for operating the storage device may comprise the steps of
- Using tube rack handler 30 to transfer tube racks between tube picker 42 and the storage locations 20 in carousel 10, and
- Using the same tube rack handler 30 to transfer tube racks between tube picker 42 and an external system.

By using the same tube rack handler for both operations, the system design becomes simpler.

The method may also comprise the step of using the same tube rack handler 30 to transfer tube racks between the storage locations 20 in carousel 10 and the external systems.

Hence, rack handler 30 may also be used for direct transfers between the storage locations 20 and the external system.

And, as already mentioned, the method may comprise the steps of
moving a first tube rack from the storage locations 20 to first nest 46a,
moving a second tube rack from the external system to third nest 46c, and
moving a third tube rack between second nest 46b and the storage locations 20 while the first and second tube racks are in the first and third nests 46a, 46c.

This scheme provides for higher throughput because the third tube rack can be transported while the first and second tube racks can be operated in the tube picker.

### Notes

In the embodiment described above, tube picker 42 is arranged at the top of carousel 10. It may, however, also be arranged at the bottom of carousel 10. Or it may be located at an intermediate level of carousel 10.

In the embodiment above, tube picker 42 comprises three nests 46a, 46b, 46c. Alternatively, it may comprise two nests only and be adapted to move tubes between them. In yet another embodiment, it may comprise a single nest and be adapted to move tubes between this nest and another location that is structured to hold tubes. In yet another embodiment, tube picker 42 may comprise more than three nests.

While there are shown and described presently preferred embodiments of the invention, it is to be distinctly understood that the invention is not limited thereto but may be otherwise variously embodied and practiced within the scope of the following claims.

## Claims

1. A storage device for tube racks comprising
a tube rack handler (30) adapted and structured to handle individual tube racks,
a carousel (10) having a vertical rotation axis (12) and being rotatable in respect to the tube rack handler (30),
a plurality of tube rack storage locations (20) arranged on the carousel (10),
a tube picker (42) having
a) a tube rack nest (46a, 46b, 46c),
b) a tube gripper (54) structured to engage an individual tube in a tube rack located in the nest (46a, 46b, 46c),
wherein the storage locations (20) and the nest (46a, 46b, 46c) are both accessible by means of the tube rack handler (30),
**characterized in that** the nest (46a, 46b, 46c) is mounted to the carousel (10) and rotatable, in respect to the tube gripper (54), by rotating the carousel (10).

2. The storage device of claim 1 further comprising a retainer assembly (70) forming a retainer (72a, 72b) arranged above the nest (46a, 46b, 46c), wherein the retainer assembly (70) is vertically displaceable in respect to the nest (46a, 46b, 46c), wherein the retainer assembly (72) is mounted to the carousel (10) and rotatable, in respect to the tube gripper (54), by rotating the carousel (10).

3. The storage device of any of the preceding claims wherein the tube picker (42) comprises at least two nests (46a, 46b, 46c).

4. The storage device of claim 3 wherein the tube picker (42) comprises at least a first, a second, and a third nest (46a, 46b, 46c), and wherein the tube picker (42) is adapted to move tubes between different tube racks in the first and third nests (46a, 46c) and to move tubes between different tube racks in the second and third nests (46b, 46c).

5. The storage device of the claims 2 and 4 wherein the retainer assembly (70) forms a first retainer (72a) arranged above the first nest (46a) and a second retainer (72b) arranged above the second nest (46b).

6. The storage device of any of the claims 3 to 5 wherein the nests (46a, 46b, 46c) are horizontally arranged side by side and mutually rotated in respect to each other about said rotation axis (12).

7. The storage device of any of the preceding claims wherein the tube picker (42) comprises a first linear guide (58) extending parallel to the rotation axis (12) and wherein the tube gripper (54) is mounted to the first linear guide (58).

8. The storage device of any of the preceding claims wherein the tube picker (42) comprises a second linear guide (60) extending perpendicularly to the rotation axis (12) and wherein the tube gripper (54) is mounted to the second linear guide (60).

9. The storage device of any of the preceding claims comprising
a plurality of the storage locations (20) located in said carousel (10) vertically above each other along the rotation axis (12) and
a guide rail (32) extending parallel to the rotation axis (12), wherein the tube rack handler (30) is vertically displaceable along the guide rail (32).

10. The storage device of any of the preceding claims wherein the tube picker (42) is arranged vertically above the storage locations (20).

11. The storage device of any of the claims 1 to 9 wherein the tube picker (42) is arranged vertically below the storage locations (20).

12. The storage device of any of the preceding claims wherein the nest (46a, 46b, 46c) comprises
three corner supports (82a, 82b, 82c) arranged on first, second, and third corners of a rectangle, with each corner support (82a, 82b, 82c) having two lateral stops (84a, 84b) located at edges of the rectangle,
a clamp (88) located at a fourth corner of the rectangle, and
an actuator (90) structured to horizontally move the clamp (88).

13. The storage device of any of the preceding claims wherein the storage locations (20) and the nests (46) have rectangular positions with radial symmetry axes (L) perpendicular to the rotation axis (12), with the rectangular positions being defined as a smallest enclosing rectangle of a tube rack located in the storage location (20) or nest (46), respectively, and
wherein distances (D2) between the rotation axis (12) and the radial symmetry axes (L) of rectangular positions of the storage locations (20) and of the nest(s) (46) are the same.

14. The storage device of any of the preceding claims wherein the tube picker (42) further comprises a pusher (64) mounted via a third linear guide (66) to the tube gripper (54), wherein the third linear guide (66) extends parallel to the rotation axis (12) and wherein the pusher (64) is movable, along the third linear guide (66), from a position below the nest (46a, 46b, 46c) to a position where it extends into the nest (46a, 46b, 46c).

15. The storage device of any of the preceding claims further comprising a transfer station (41) for transferring a tube rack between an external system and the storage device, wherein the tube rack handler (30) is adapted to access a tube rack on the transfer station (41).

16. The storage device of any of the preceding claims further comprising
a plurality of storage racks (20) mounted to said carousel (10) and forming the tube rack storage locations (20),
for each storage rack (20), a spring member (27) laterally positioning a top end of the storage rack (20).

17. A storage cabinet comprising the storage device (8) of any of the preceding claims and further comprising
a chamber (4) and
a climate controller (6) adapted to control a temperature and/or atmospheric composition parameters within the chamber (4),
wherein the storage device (8) is arranged in the chamber (4).

18. The storage cabinet of claim 17 further comprising a transfer station (41) for transferring a tube rack between an external system and the storage device (8), wherein the tube rack handler (30) is adapted to access a tube rack on the transfer station (41) and wherein the transfer station (41) is located outside the storage cabinet,
and in particular wherein the storage cabinet further comprises a machine-controlled door (5b), wherein the tube rack handler (30) is adapted to access the tube rack on the transfer station (41) through the machine-controlled door (5b).

19. A method for operating the storage device or storage cabinet of any of the preceding claims comprising the steps of
using the tube rack handler (30) to transfer tube racks between the tube picker (42) and the storage locations (20).

20. The method of claim 19 further comprising the steps of
using the tube rack handler (30) to transfer tube racks between the tube picker (42) and an external system.

21. The method of any of the preceding claims 19 or 20 further comprising the steps of
placing a tube rack having a tube location to be engaged in the nest (46a, 46b, 46c),
rotating the carousel (10) to position the tube gripper (54) at a location above tube location.

22. The method of any of the claims 19 to 21 further comprising the steps of
moving a first tube rack from the storage locations (20) to a first nest (46a),
moving a second tube rack from the external system to a third nest (46c), and
moving a third tube rack between a second nest (46b) and the storage locations (20) while the first and second tube racks are in the first and third nests (46a, 46c).

## Patentansprüche

1. Lagervorrichtung für Röhrchengestelle, umfassend
eine Röhrchengestell-Manipuliereinrichtung (30), die eingerichtet und strukturiert ist, um einzelne Röhrchengestelle zu manipulieren,
ein Karussell (10), das eine vertikale Drehachse (12) aufweist und in Bezug auf die Röhrchengestell-Manipuliereinrichtung (30) drehbar ist,
eine Vielzahl von Röhrchengestell-Lagerplätzen (20), die auf dem Karussell (10) angeordnet sind,
eine Röhrchen-Entnahmevorrichtung (42) aufweisend
a) eine Röhrchengestell-Aufnahme (46a, 46b, 46c),
b) einen Röhrchen-Greifer (54), der strukturiert ist, um in ein einzelnes Röhrchen in einem in der Aufnahme (46a, 46b, 46c) befindlichen Röhrchengestell zu ergreifen,
wobei die Lagerplätze (20) und die Aufnahme (46a, 46b, 46c) beide mittels der Röhrchengestell-Manipuliereinrichtung (30) zugänglich sind,
**dadurch gekennzeichnet, dass** die Aufnahme (46a, 46b, 46c) am Karussell (10) montiert ist und in Bezug auf den Röhrchen-Greifer (54) durch Drehen des Karussells (10) drehbar ist.

2. Lagervorrichtung nach Anspruch 1, ferner umfassend eine Halteanordnung (70), die einen Halter (72a, 72b) bildet, der oberhalb der Aufnahme (46a, 46b, 46c) angeordnet ist, wobei die Halteanordnung (70) in Bezug auf die Aufnahme (46a, 46b, 46c) vertikal bewegbar ist, wobei die Halteanordnung (72) am Karussell (10) montiert ist und in Bezug auf den Röhrchen-Greifer (54) durch Drehen des Karussells (10) drehbar ist.

3. Lagervorrichtung nach einem der vorhergehenden Ansprüche, wobei die Röhrchen-Entnahmevorrichtung (42) mindestens zwei Aufnahmen (46a, 46b, 46c) umfasst.

4. Lagervorrichtung nach Anspruch 3, wobei die Röhrchen-Entnahmevorrichtung (42) mindestens eine erste, eine zweite und eine dritte Aufnahme (46a, 46b, 46c) umfasst, und wobei die Röhrchen-Entnahmevorrichtung (42) eingerichtet ist, um Röhrchen zwischen verschiedenen Röhrchengestellen in der ersten und der dritten Aufnahme (46a, 46c) zu bewegen und Röhrchen zwischen verschiedenen Röhrchengestellen in der zweiten und der dritten Aufnahme (46b, 46c) zu bewegen.

5. Lagervorrichtung nach den Ansprüchen 2 und 4, wobei die Halteanordnung (70) einen ersten Halter (72a) bildet, der oberhalb der ersten Aufnahme (46a) angeordnet ist, und einen zweiten Halter (72b) bildet, der oberhalb der zweiten Aufnahme (46b) angeordnet ist.

6. Lagervorrichtung nach einem der Ansprüche 3 bis 5, wobei die Aufnahmen (46a, 46b, 46c) horizontal nebeneinander angeordnet sind und in Bezug zueinander um besagte Drehachse (12) gegenseitig verdreht sind.

7. Lagervorrichtung nach einem der vorhergehenden Ansprüche, wobei die Röhrchen-Entnahmevorrichtung (42) eine erste Linearführung (58) umfasst, die sich parallel zur Drehachse (12) erstreckt, und wobei der Röhrchen-Greifer (54) an der ersten Linearführung (58) montiert ist.

8. Lagervorrichtung nach einem der vorhergehenden Ansprüche, wobei die Röhrchen-Entnahmevorrichtung (42) eine zweite Linearführung (60) umfasst, die sich senkrecht zur Drehachse (12) erstreckt, und wobei der Röhrchen-Greifer (54) an der zweiten Linearführung (60) montiert ist.

9. Lagervorrichtung nach einem der vorhergehenden Ansprüche, umfassend
eine Vielzahl der Lagerplätze (20), die in dem besagten Karussell (10) vertikal übereinander entlang der Drehachse (12) angeordnet sind, und
eine Führungsschiene (32), die sich parallel zur Drehachse (12) erstreckt, wobei die Röhrchengestell-Manipuliereinrichtung (30) vertikal entlang der Führungsschiene (32) verschiebbar ist.

10. Lagervorrichtung nach einem der vorhergehenden Ansprüche, wobei die Röhrchen-Entnahmevorrichtung (42) vertikal oberhalb der Lagerplätze (20) angeordnet ist.

11. Lagervorrichtung nach einem der Ansprüche 1 bis 9, wobei die Röhrchen-Entnahmevorrichtung (42) vertikal unterhalb der Lagerplätze (20) angeordnet ist.

12. Lagervorrichtung nach einem der vorhergehenden Ansprüche, wobei die Aufnahme (46a, 46b, 46c) umfasst:
drei Eckstützen (82a, 82b, 82c), die an einer ersten, einer zweiten und einer dritten Ecke eines Rechtecks angeordnet sind, wobei jede Eckstütze (82a, 82b, 82c) zwei seitliche Anschläge (84a, 84b) aufweist, die an Kanten des Rechtecks angeordnet sind,
eine Klemme (88), die an einer vierten Ecke des Rechtecks angeordnet ist, und
einen Aktor (90), der strukturiert ist, um die Klemme (88) horizontal zu bewegen.

13. Lagervorrichtung nach einem der vorhergehenden Ansprüche, wobei die Lagerplätze (20) und die Aufnahmen (46) rechteckige Positionen mit radialen Symmetrieachsen (L) senkrecht zur Drehachse (12) aufweisen, wobei die rechteckigen Positionen als ein kleinstes umschliessendes Rechteck eines Röhrchengestells definiert sind, das in dem Lagerplatz (20) bzw. der Aufnahme (46) angeordnet ist, und
wobei Abstände (D2) zwischen der Drehachse (12) und den radialen Symmetrieachsen (L) von rechteckigen Positionen der Lagerplätze (20) und der Aufnahme(n) (46) gleich sind.

14. Lagervorrichtung nach einem der vorhergehenden Ansprüche, wobei die Röhrchen-Entnahmevorrichtung (42) ferner einen Schieber (64) umfasst, der über eine dritte Linearführung (66) am Röhrchen-Greifer (54) montiert ist, wobei sich die dritte Linearführung (66) parallel zur Drehachse (12) erstreckt und wobei der Schieber (64) entlang der dritten Linearführung (66) von einer Position unterhalb der Aufnahme (46a, 46b, 46c) zu einer Position, in der er sich in die Aufnahme (46a, 46b, 46c) hinein erstreckt, beweglich ist.

15. Lagervorrichtung nach einem der vorhergehenden Ansprüche, ferner umfassend eine Übergabestation (41) zum Transferieren eines Röhrchengestells zwischen einem externen System und der Lagervorrichtung, wobei die Röhrchengestell-Manipuliereinrichtung (30) eingerichtet ist, um auf ein Röhrchengestell auf der Übergabestation (41) zuzugreifen.

16. Lagervorrichtung nach einem der vorhergehenden Ansprüche, ferner umfassend
eine Vielzahl von Lagergestellen (20), die am besagten Karussell (10) montiert sind und die Röhrchengestell-Lagerplätze (20) bilden,
für jedes Lagergestell (20) ein Federelement (27), das ein oberes Ende des Lagergestells (20) seitlich positioniert.

17. Lagerschrank umfassend die Lagervorrichtung (8) nach einem der vorhergehenden Ansprüche und ferner umfassend
eine Kammer (4) und
eine Klimasteuerung (6), die dazu ausgestaltet ist, eine Temperatur und/oder Parameter der atmosphärischen Zusammensetzung innerhalb der Kammer (4) zu steuern,
wobei die Lagervorrichtung (8) in der Kammer (4) angeordnet ist.

18. Lagerschrank nach Anspruch 17 weiter umfassend eine Übergabestation (41) zum Transferieren eines Röhrchengestells zwischen einem externen System und der Lagervorrichtung (8), wobei die Röhrchengestell-Manipuliereinrichtung (30) dazu ausgestaltet ist, auf ein Röhrchengestell auf der Übergabestation (41) zuzugreifen, und wobei sich die Übergabestation (41) ausserhalb des Lagerschranks befindet,
und insbesondere wobei der Lagerschrank ferner eine maschinengesteuerte Tür (5b) umfasst, wobei die Röhrchengestell-Manipuliereinrichtung (30) dazu ausgestaltet ist, auf das Röhrchengestell auf der Übergabestation (41) durch die maschinengesteuerte Tür (5b) hindurch zuzugreifen.

19. Verfahren zum Betreiben der Lagervorrichtung oder des Lagerschranks nach einem der vorhergehenden Ansprüche, umfassend die Schritte
Verwenden der Röhrchengestell-Manipuliereinrichtung (30), um Röhrchengestelle zwischen der Röhrchen-Entnahmevorrichtung (42) und den Lagerplätzen (20) zu transferieren.

20. Verfahren nach Anspruch 19 weiter umfassend die Schritte
Verwenden der Röhrchengestell-Manipuliereinrichtung (30), um Röhrchengestelle zwischen der Röhrchen-Entnahmevorrichtung (42) und einem externen System zu transferieren.

21. Verfahren nach einem der vorhergehenden Ansprüche 19 oder 20, ferner umfassend die Schritte
Platzieren eines Röhrchengestells, das einen in Eingriff zu nehmenden Röhrchen-Platz aufweist, in der Aufnahme (46a, 46b, 46c),
Drehen des Karussells (10), um den Röhrchen-Greifer (54) an einem Ort oberhalb des Röhrchen-Platzes zu positionieren.

22. Verfahren nach einem der Ansprüche 19 bis 21, ferner umfassend die Schritte
Bewegen eines ersten Röhrchengestells von den Lagerplätzen (20) zu einer ersten Aufnahme (46a),
Bewegen eines zweiten Röhrchengestells vom externen System zu einer dritten Aufnahme (46c), und
Bewegen eines dritten Röhrchengestells zwischen einer zweiten Aufnahme (46b) und den Lagerplätzen (20), während sich das erste und das zweite Röhrchengestell in der ersten und der dritten Aufnahme (46a, 46c) befinden.

## Revendications

1. Un dispositif de stockage pour supports de tubes comprenant
un manipulateur de supports de tubes (30) adapté et conçu pour manipuler des supports de tubes individuels,
un carrousel (10) ayant un axe de rotation vertical (12) et pouvant tourner par rapport au manipulateur de supports de tubes (30),
une pluralité d'emplacements de stockage de supports de tubes (20) disposés sur le carrousel (10),
un préhenseur de tubes (42) ayant
a) un logement pour supports de tubes (46a, 46b, 46c),
b) un dispositif de saisie de tubes (54) conçu pour saisir un tube individuel dans un support de tubes situé dans le logement (46a, 46b, 46c),
dans lequel les emplacements de stockage (20) et le logement (46a, 46b, 46c) sont tous deux accessibles au moyen du manipulateur de supports de tubes (30),
**caractérisé en ce que** le logement (46a, 46b, 46c) est monté sur le carrousel (10) et peut tourner, par rapport au dispositif de saisie de tubes (54), par rotation du carrousel (10).

2. Le dispositif de stockage selon la revendication 1, comprenant en outre un ensemble de retenue (70) formant un dispositif de retenue (72a, 72b) disposé au-dessus du logement (46a, 46b, 46c), dans lequel l'ensemble de retenue (70) est déplaçable verticalement par rapport au logement (46a, 46b, 46c), l'ensemble de retenue (72) étant monté sur le carrousel (10) et pouvant tourner, par rapport au dispositif de saisie de tubes (54), par rotation du carrousel (10).

3. Le dispositif de stockage selon l'une quelconque des revendications précédentes, dans lequel le préhenseur de tubes (42) comprend au moins deux logements (46a, 46b, 46c).

4. Le dispositif de stockage selon la revendication 3, dans lequel le préhenseur de tubes (42) comprend au moins un premier, un deuxième et un troisième logement (46a, 46b, 46c), et dans lequel le préhenseur de tubes (42) est adapté pour déplacer des tubes entre différents supports de tubes dans le premier et le troisième logement (46a, 46c) et pour déplacer des tubes entre différents supports de tubes dans le deuxième et le troisième logement (46b, 46c).

5. Le dispositif de stockage selon les revendications 2 et 4, dans lequel l'ensemble de retenue (70) forme un premier élément de retenue (72a) disposé au-dessus du premier logement (46a) et un deuxième élément de retenue (72b) disposé au-dessus du deuxième logement (46b).

6. Le dispositif de stockage selon l'une quelconque des revendications 3 à 5, dans lequel les logements (46a, 46b, 46c) sont disposés horizontalement côte à côte et sont mutuellement pivotés les uns par rapport aux autres autours dudit axe de rotation (12).

7. Le dispositif de stockage selon l'une quelconque des revendications précédentes, dans lequel le préhenseur de tubes (42) comprend un premier guide linéaire (58) s'étendant parallèlement à l'axe de rotation (12) et dans lequel le dispositif de saisie de tubes (54) est montée sur le premier guide linéaire (58).

8. Le dispositif de stockage selon l'une quelconque des revendications précédentes, dans lequel le préhenseur de tubes (42) comprend un deuxième guide linéaire (60) s'étendant perpendiculairement à l'axe de rotation (12) et dans lequel le dispositif de saisie de tubes (54) est montée sur le deuxième guide linéaire (60).

9. Le dispositif de stockage selon l'une quelconque des revendications précédentes, comprenant
une pluralité d'emplacements de stockage (20) situés dans ledit carrousel (10) verticalement les uns au-dessus des autres le long de l'axe de rotation (12) et
un rail de guidage (32) s'étendant parallèlement à l'axe de rotation (12), dans lequel le manipulateur de support de tubes (30) est déplaçable verticalement le long du rail de guidage (32).

10. Le dispositif de stockage selon l'une quelconque des revendications précédentes, dans lequel le préhenseur de tubes (42) est disposé verticalement au-dessus des emplacements de stockage (20).

11. Le dispositif de stockage selon l'une quelconque des revendications 1 à 9, dans lequel le préhenseur de tubes (42) est disposé verticalement en dessous des emplacements de stockage (20).

12. Le dispositif de stockage selon l'une quelconque des revendications précédentes, dans lequel le logement (46a, 46b, 46c) comprend
trois supports d'angle (82a, 82b, 82c) disposés sur les premier, deuxième et troisième angles d'un rectangle, chaque support d'angle (82a, 82b, 82c) comportant deux butées latérales (84a, 84b) situées sur les bords du rectangle,
une pince (88) située au quatrième coin du rectangle, et
un actionneur (90) conçu pour déplacer horizontalement la pince (88).

13. Le dispositif de stockage selon l'une quelconque des revendications précédentes, dans lequel les emplacements de stockage (20) et les logements (46) ont des positions rectangulaires avec des axes de symétrie radiale (L) perpendiculaires à l'axe de rotation (12), les positions rectangulaires étant définies comme le plus petit rectangle englobant un support de tube situé respectivement dans l'emplacement de stockage (20) ou le logement (46), et
dans lequel les distances (D2) entre l'axe de rotation (12) et les axes de symétrie radiale (L) des positions rectangulaires des emplacements de stockage (20) et du ou des logements (46) sont identiques.

14. Le dispositif de stockage selon l'une quelconque des revendications précédentes, dans lequel le préhenseur de tubes (42) comprend en outre un poussoir (64) monté via un troisième guide linéaire (66) sur le dispositif de saisie de tubes (54), dans lequel le troisième guide linéaire (66) s'étend parallèlement à l'axe de rotation (12) et dans lequel le poussoir (64) est mobile, le long du troisième guide linéaire (66), d'une position située sous le logement (46a, 46b, 46c) à une position où il s'étend dans le logement (46a, 46b, 46c).

15. Le dispositif de stockage selon l'une quelconque des revendications précédentes, comprenant en outre une station de transfert (41) destinée à transférer un support de tubes entre un système externe et le dispositif de stockage, dans lequel le manipulateur de support de tubes (30) est adapté pour accéder à un support de tubes sur la station de transfert (41).

16. Le dispositif de stockage selon l'une quelconque des revendications précédentes, comprenant en outre
une pluralité de supports de stockage (20) montés sur ledit carrousel (10) et formant les emplacements de stockage des supports de tubes (20),
pour chaque support de stockage (20), un élément à ressort (27) positionnant latéralement une extrémité supérieure du support de stockage (20).

17. Une armoire de stockage comprenant le dispositif de stockage (8) selon l'une quelconque des revendications précédentes et comprenant en outre
une chambre (4) et
un régulateur climatique (6) adapté pour réguler la température et/ou les paramètres de composition atmosphérique à l'intérieur de la chambre (4),
dans laquelle le dispositif de stockage (8) est disposé dans la chambre (4).

18. L'armoire de stockage selon la revendication 17, comprenant en outre une station de transfert (41) destinée à transférer un support de tubes entre un système externe et le dispositif de stockage (8), dans laquelle le manipulateur de supports de tube (30) est adapté pour accéder à un support de tubes sur la station de transfert (41) et dans laquelle la station de transfert (41) est située à l'extérieur de l'armoire de stockage,
et en particulier dans lequel l'armoire de stockage comprend en outre une porte commandée par machine (5b), dans lequel le manipulateur de supports de tubes (30) est adapté pour accéder au support de tubes sur la station de transfert (41) à travers la porte commandée par machine (5b).

19. Un procédé pour faire fonctionner le dispositif de stockage ou l'armoire de stockage selon l'une quelconque des revendications précédentes, comprenant les étapes consistant à
utiliser le manipulateur de supports de tubes (30) pour transférer des supports de tubes entre le préhenseur de tubes (42) et les emplacements de stockage (20).

20. Le procédé selon la revendication 19, comprenant en outre les étapes consistant à
utiliser le manipulateur de supports de tubes (30) pour transférer des supports de tubes entre le préhenseur de tubes (42) et un système externe.

21. Le procédé selon l'une quelconque des revendications précédentes 19 ou 20, comprenant en outre les étapes consistant à
placer un support de tubes comportant un emplacement de tube destiné à être engagé dans le logement (46a, 46b, 46c),
faire tourner le carrousel (10) pour positionner le dispositif de saisie de tubes (54) à un emplacement situé au-dessus de l'emplacement de tube.

22. Le procédé selon l'une quelconque des revendications 19 à 21, comprenant en outre les étapes consistant à
déplacer un premier support de tubes des emplacements de stockage (20) vers un premier logement (46a),
déplacer un deuxième support de tubes du système externe vers un troisième logement (46c), et
déplacer un troisième support de tubes entre un deuxième logement (46b) et les emplacements de stockage (20) tandis que les premier et deuxième supports de tubes se trouvent respectivement dans les premier et troisième logements (46a, 46c).
